# EUROPEAN PATENT APPLICATION

(11) **EP 1 947 832 A1**
(43) Date of publication of application: **23.07.2008**
(21) Application number: 08150352.6
(22) Date of filing: 17.01.2008
(51) Int. Cl.: H04M 15/00

(54) **Method for optimizing a fee tariff system for a user of a telecommunication system**

(30) Priority: 17.01.2007 US 624049
(71) Applicant: Clintworld GmbH, 25474 Bönningstedt (DE)
(72) Inventor: Klotzki, Wolfgang, 25474, Ellerbek (DE)
(74) Representative: Birken, Lars

(57) **Abstract**

A method for selecting an optimized individual fee tariff system for a user of a telecommunication system. The fee tariff system includes fee rates for at least two different types of services, the method including receiving user data, the user data comprising an actual total sum of money paid for all types of services within a specific period of time in the past and an identification of the fee tariff system of the user in this period of time (e.g., a month, year, etc), calculating an estimated individual distribution of the frequency of use of the different types of service by applying an algorithm to the user data, calculating at least one alternative total sum of money paid for all types of services in total for the distribution of the services as calculated above within the specific period of time by applying an alternative fee tariff system, and comparing the alternative total sum with the actual total sum.

## Description

### BACKGROUND OF THE INVENTION

The invention relates to a method for calculating an optimized individual fee tariff system for a user of a telecommunication system.

### DESCRIPTION OF PRIOR ART

Today, telecommunication systems cover a broad range of different services. E.g. such services may include telephone services, short texts message services, e-mail services, internet services and picture message services. All these services may be offered to be used from a home or office base or to be used as mobile services. The different services may even be further sub-divided, e.g. the telephone services may be differentiated as to the distance of the call (usually longer distances are more expensive than shorter ones) and the time at which the call is made (calls at night time are often cheaper than calls at day time). A still further differentiation is often made depending on the tariff system to which the recipient or recipients of the phone call, the text message and so on is entitled. Usually, phone calls, text messages and so on, which are conducted between two users entitled in the same fee tariff system are cheaper than those which are conducted between two or more users which are entitled in different fee tariff systems. All these differentiations discussed above are to be understood as different types of services in the sense of this description and the attached claims.

A major problem in telecommunication industries is how to select an appropriate fee tariff system for an individual user of a telecommunication system. Generally, users tend to use the various types of services in quite different ways. E.g. students and adolescents tend to intensively use text messaging and picture messaging and focus their using periods on afternoon and evening times and the weekend, with a main focus on national connections. Business people usually concentrate their types of services to national and international connections and often use e-mail services, concentrating their use to the working days. The different behavior of users with regard to the types of services used is often entitled as a user profile and in this description and the attached claims the term "user profile" should be understood in such a way as to define the frequency in which the different services are used by an individual user and the times in which they are used and the connection specification, i.e. whether national or international connections are used and which fee tariff system the persons to which the connection is established is entitled, and relevant further individual connection parameters.

It is a key competence for companies involved in telecommunication services to be able to offer each user a fee tariff system which is particularly well-suited for his user profile, i.e. which produces particularly low costs for this individual user profile. To satisfy this need providers of telecommunication services offer a number of different fee tariff systems which include individual fee tariffs for each type of service and are different in such a way that specific types of services are cheaper in some of the fee tariff systems than in others. By this, users which user profile mainly concentrates on one or more types of services are able to select a fee tariff system, wherein these specific types of services are offered at a particularly low price.

Usually, the user may select under a large number of different fee tariff systems. Though providers of telecommunication services usually name their fee tariff systems according to their specific focus, e.g. "business tariff' or "private tariff", it is a major problem to select the fee tariff system which is particularly well-suited for an individual user.

An attempt was made to solve this problem in such a way, that the user identifies for each type of service its frequency of use in the past. This would allow to precisely calculate an optimum fee tariff system based on the assumption that the user will not change his user profile in the future. However, a major draw-back of this approach is that most users cannot provide such detailed information or at least are not willing to provide such detailed information because it is very time-consuming to identify the frequency of use for each type of service.

### OBJECT OF THE INVENTION

It is the object of the present invention to provide a method for selecting an optimum individual fee tariff system for a user of a telecommunication system in a more convenient and reliant way than existing selection methods can do.

### BRIEF SUMMARY OF THE INVENTION

This problem is solved by providing a method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time (e.g., a month, year, etc),
b. calculating an estimated individual distribution of the frequency of use of the different types of service by applying an algorithm to the user data,
c. calculating at least one alternative total sum of money paid for all types of services in total for the distribution of the services as calculated in b) within the specific period of time by applying an alternative fee tariff system,
d. comparing the alternative total sum with the actual total sum, and
e. selecting the alternative fee tariff system as an optimized fee tariff system if the alternative total sum of money calculated using the alternative fee tariff system is smaller than the actual total sum of money.

### BRIEF DESCRIPTION OF THE DRAWINGS

Fig. 1 shows a schematical diagram of a selection method according to a first embodiment the invention.

Fig. 2 shows a schematical diagram of the step of reverse simulation logics in Fig. 1.

Fig. 3 shows a schematical diagram of a selection method according to a second embodiment of the invention.

Fig. 4 shows a schematical diagram of a selection method according to a third embodiment of the invention.

### DETAILED DESCRIPTION OF THE INVENTION

The method according to the invention significantly simplifies and improves the selection of an appropriate fee tariff system for an individual user profile. An aspect of the invention is to concentrate on specific data characterizing the user profile. By this, the method is much more convenient than prior art selecting methods. Whereas according to the prior art detailed information about the user profile consisting of frequencies of use for a number of types of services are required to select an appropriate fee tariff system, the method according to an embodiment of the invention conducts this selection based on only a very small number of pieces of information, in particular only using information about an actual total sum of money paid in the past for all types of services which shall be included in the fee tariff system (e.g. a monthly billing or an average of a number of monthly billings) and the identification of the fee tariff system under which this actual total sum of money was billed. The user thus has only to present two pieces of information which are generally well-known to him. Some embodiments of the invention refrain from acquiring specific data about frequency of use of individual types of services which the user cannot identify without remarkable effort.

The inventor has come to the conclusion that based on these two pieces of information a rather precise approach is possible to select an optimized individual fee tariff system by applying an algorithm to these pieces of information to calculate an estimated individual distribution of the frequency of use of the different types of services. By this application of an algorithm a dependency of typical user profiles from the amount of the actual total sum of money for all types of services can be used to provide a good estimation of the distribution of the individual distribution of the frequency of use of the different types of services. To allow a correct weighting of the individual types of services, the fee tariffs for each individual type of service according to the actual fee tariff system are applied.

Based on these pieces of information and the distribution of the frequency of use of the different types of services an alternative total sum of money paid for all types of services can be calculated for the distribution of the specific types of services as calculated. This alternative total sum of money can then be compared to the actual total sum of money and by this it can be determined, whether the alternative total sum of money is advantageous for the user.

The invention may be executed with additional pieces of information received from the user. It should be noted that the invention allows to calculate an optimized fee tariff system with only such two pieces of information (i.e. the actual total sum of money paid in the past for all types of services which shall be included in the fee tariff system (e.g. a monthly billing or an average of a number of monthly billings) and the identification of the fee tariff system under which this actual total sum of money was billed) received from the user consisting of the actual total sum of money paid for all types of services within a specific period of time in the past and the identification of the fee tariff system of the user in this period of time and not comprising any additional information.

Thus, the method according to the invention provides a simplified and convenient approach to select an appropriate fee tariff system for users of a telecommunication system.

As an alternative to the method described above, a first and a second alternative total sum of money can be calculated by applying a first and a second alternative fee tariff system, respectively. By this, the first, the second alternative total sum of money and the actual total sum of money can be compared and the optimum fee tariff system can be selected from the fee tariff systems according to which these total sums of money were calculated.

Still further, a large number of alternative total sums of money can be calculated by applying a respective large number of alternative fee tariff systems. As an example, the estimated distribution of the frequencies of use of the individual types of services can be applied to all fee tariff systems which are available for the user to evaluate all possibilities.

A first detail of the method according to the invention as discussed above is an improvement, wherein calculating the estimated individual distribution of the frequency of use of the different types of service from the user data comprises the steps of:
b1) applying a predetermined typical distribution of the frequency of use of the different types of service,
b2) calculating a typical amount of money for each type of service by applying the actual fee tariff system of the user,
b3) calculating an individual amount of money for each type of service by scaling each of the typical amounts of money as calculated under above b) with one single scaling factor such that the sum of all individual amounts of money of the types of service results in the actual total sum of money paid for all types of services, and
b4) calculating an individual distribution of the frequency of use for each type of service by applying the actual fee tariff system to the scaled individual amounts of money for each type of service as calculated under above c).

Each of these steps is described in further detail below. In one embodiment, the method may include applying a number of pre-stored typical distributions of the frequency of use of the different types of service. For example, a typical distribution would be that a typical user would send 60 e-mails, would have used 120 minutes (2 hours) of national phone calls, and 30 minutes of international phone calls in a given month. The pre-stored typical distributions may be derived from past data or can be created. Then, a typical amount of money for each type of service can be calculated for each of these distributions by applying the actual fee tariff system of the user. For example, the user may currently use tariff system X and may have spent $100 for services in a given month (e.g., November). Tariff system X may charge $0.083 per e-mail, $0.083 per minute of national phone calls, and $0.111 per minute of international calls. Applying Tariff system X to the typical pre-stored distribution, the amount of money for each type of service would be $5 for e-mail service, $10 for national phone service, and $10 for international phone call service. Then, if necessary, an individual amount of money for each type of service can be calculated by scaling each of the typical amounts of money previously determined with one single scaling factor such that the sum of all individual amounts of money of the types of service results in the actual total sum of money paid for all types of services. For example, in this example, a scaling factor can be created using the relative proportion of the actual cost of the user using Tariff X in a given month vs. the cost of the typical distribution using Tariff X. More specifically, the scaling factor could be "4" and could be calculated as follows: $100/($5 + $5 + $10) = 4. If the previously described step is undertaken, an individual distribution of the frequency of use can be calculated for each type of service by applying the actual fee tariff system to the scaled individual amount of money for each type of service as calculated. More specifically, the scaling factor can be multiplied with the quantitative values associated with the typical distribution(s). For example, the typical distribution in this example, could be scaled as follows: (60 Emails; 2 hours of national calls; and 2 hours of international calls) x 4 = (240 Emails; 8 hours of national calls; and 8 hours of international calls). Then, as described above and below, one of a number of user profiles determined according to this process, which a total sum was calculated which is closest to the actual total sum as the estimated individual distribution of the frequency of use of the different types of service is selected.

This preferred embodiment allows to provide a good estimation of the individual distribution of the frequency of use of the different types of services from the user data consisting of the actual total sum money and the identification of the actual fee tariff system in the past. One step of this preferred embodiment is to apply a pre-determined typical distribution of the frequency of use of the different types of service. This pre-determined typical distribution could be selected under a number of pre-determined typical distributions stored in an memory by selection criteria like the actual total sum of money or the actual fee tariff system as input by the user. Preferably, for this step a logical operator combining the pre-determined typical distributions and the user data is applied to select the specific pre-determined typical distribution which shall be the basis for further calculating steps. Based on the such determined typical distribution the typical amount of money for each type of service can be calculated and from this a scaling of the number of typical amounts of money for the number of types of services can be done with one single scaling factor to comply with the actual total sum of money as received from the user. Based on the such scaled individual amounts of money the frequency of use for each type of service can be calculated by applying the actual fee tariff system as received from the user to the amounts of money.

The method according to the invention may be further improved in that the step of applying a pre-determined typical distribution of the frequency of use of the different types of service is done by selecting such a distribution which allows a maximum number of connections in the actual fee tariff system with the actual total sum of money, or a maximum duration of the connections in the actual fee tariff system with the actual total sum of money. By this, the distribution of the frequency of use for the different types of service is selected in such a way that it is assumed that the user used the actual fee tariff system in an optimized way, i.e. in such a way, that those types of service which are offered to a very competitive price in this fee tariff system are the types of service which are mainly used by the user. Based on such an assumption, the distribution of the frequency of use for the types of service will fit to the user behavior in most of the cases and further calculation will allow to select an optimum fee tariff system which fits to the most probable user behavior.

The invention can be further improved by including the steps according to claim 5. By this, the estimation of the distribution of the frequency of use of the types of service can be conducted more precisely by acknowledging a fixed individual frequency of use for at least one type of service which was precisely calculated from the user data and, based on this fixed individual frequency, calculating an estimated distribution of the frequency of use for the remaining types of service. By this, the determination of an estimated distribution can be further improved. In particular, claim 5 specifies that the step of applying a pre-determined typical distribution of the frequency of use of the different types of service is done by selecting such a distribution which allows:
i) a maximum number of connections in the actual fee tariff system with the actual total sum of money (e.g., the number of connections (like the number of national calls and international calls) of each of the services in the typical distribution selected is higher than the number of connections in the user's current tariff system and in all other typical distributions being evaluated).), or
ii)a maximum duration of the connections in the actual fee tariff system with the actual total sum of money (e.g., the sum of durations of each of the services in the typical distribution selected is higher than the sum of durations of the services in the user's current tariff system and in all other typical distributions being evaluated).

Still further, it is preferred to include the steps according to claim 6. By this, additional information received from the user about one or more actual distributions of the frequency of use, such as one or more frequency of use for an individual type of service, can be used to select a user profile which is a best fit for the individual user out of a list of a number of user profiles. The method according to the invention can be significantly improved by receiving only one actual frequency of use for a type of service and often a user is able to provide such additional information without additional effort. By this, a user profile can be selected which is supposed to be in good compliance with the telecommunication behavior of the user.

The user may preferably select the actual fee tariff system from a list of fee tariff systems presented to him (on a display or the like). This list may preferably contain all fee tariff systems which are available at the time of the selecting step for an optimized individual fee tariff system which were available in the past.

According to another embodiment of the invention, the method for selecting an optimized individual fee tariff system for a user of a telecommunication system comprises the steps of:
a. receiving user data, the user data consisting of an actual total sum of money paid for all types of services within a specific period of time in the past and an identification of the fee tariff system of the user in this period of time,
b. selecting a number of user profiles from a list containing a number of predetermined typical user profiles wherein each typical user profile contains a distribution of the frequency of use of the types of services.
c. calculating an alternative total sum of money for the time period for each user profile by applying an alternative fee tariff system,
d. comparing the alternative total sums with the actual total sum, and
e. displaying the actual total sum and at least one alternative total sum such that the difference between the alternative fee tariff system and the actual fee tariff system can be recognized.

By this, the user is offered a number of alternative total sums of money for a number of user profiles so that the user is given the possibility to select a user profile which he thinks is the best fit for him. By this, the user may exclude such user profiles which comprise types of services which are not used by himself so that the user is able to select those fee tariff systems which are best-suited for a user profile which he thinks is the best fit for himself. This improvement is of particular relevance if a number of an alternative total sums of money is calculated. In this case, the user is presented a number of total sums of money for different fee tariff systems and in these different fee tariff systems a number of user profiles are presented to the user, thus presenting a two-dimensional matrix to the user, wherein in one dimension the user profiles are listed and in the other dimension the fee tariff systems are listed. By this, a simple comparison between the different fee tariff systems for each user profile is possible and the user may conveniently select the fee tariff system which he considers to be the best fit for his telecommunication behaviour.

The method may be further improved according to claims 10 and 11.

According to a still further preferred embodiment the step of receiving user data comprises the step of transferring user data from a memory device located in a user's cellular to a calculating device and performing at least the steps of calculating one alternative total sum of money paid for all types of services in total for the distribution of services as calculated within the specific period of time by applying an alternative fee tariff system, and comparing the alternative total sum with the actual total sum in said calculating device, wherein the actual total sum of money paid for all types of services within a specific period of time is calculated based on the user data transferred from the memory device to the calculating device.

According to this embodiment, actual user data may be read out from the address database or any other database stored in a cellular, e.g. user data comprising details of the elements stored in the address data or details stored in the register of incoming or outgoing data connections of the cellular. Such reading out of user data may be accomplished in an anonymized form to ensure data confidentiality or may be done in connection with a preceding step of confirmation by the user to read out such data. By this, actual data about the user profile in a specific time, in particular the time short before the application of the method for calculating an optimized individual fee tariff system can be acquired. The data may be transferred via a data cable or wireless, e.g. using Bluetooth technology or the like. By this, calculating of the user profile can be based on much more reliable data, thus ensuring an optimized fee tariff recommencation.

The user data read out from the cellular may preferable comprise address data or data connection data, as discussed before.

Still further, it is preferred to comprise a step of modifying the transferred user data before calculating the actual sum and the alternative sum. By this, the user may be given the possibility to amend the data read out from the cellular before the steps for calculating the optimized fee tariff system are performed. In detail, the user may remove phone numbers read out from the address book which are no longer in use or may remove data connections read out from the data connections register which are not typical for the user behavior.

Still further, the method according to the invention may be further improved in that the step of selecting the alternative fee tariff system comprises contacting a provider of the alternative fee tariff system and transferring relevant contract data to this provider. According to this preferred embodiment, after selecting the alternative fee tariff system an automatized change of the fee tariff system is initiated by transferring the contract data which are required for such change to the new selected provider.

In case that a certain period of cancellation must be complied with before a change of the provider can be initiated, it may be preferred to first change into a different fee tariff system of the present provider and after said period of cancellation has elapsed, to change into a second fee tariff system of a different provider which is still further optimized with regard to the first alternative fee tariff system.

Still further, the method according to the invention might be improved by conducting a predetermined time period after the step of selecting the alternative fee tariff system the steps of reading out user data, said user data comprising the actual types of service used by the user and its frequency of use in the time since the change of the fee tariff system; calculating an actual total sum of money paid for these types of services within a specific period of time; calculating one alternative total sum of money paid for all types of services in total for the actual frequency of use of the actual types of services as read out before within the specific period of time by applying an alternative fee tariff system; comparing the alternative total sum with the actual total sum; and informing the user if the alternative total sum of money calculated using the alternative fee tariff system is less than the actual total sum of money wherein the user is preferably informed via one data connection of the types of service. According to this preferred embodiment, relevant user data is read out a certain period of time after the change of a fee tariff system. According to this embodiment, a repetition of the analysis is performed at a time, where user data is better accessible since such relevant user data may be read out from the cellular itself or the from a database of the new provider after the change. By this, the user may be informed at constant time intervals whether there would be a fee tariff system available for his present user profile which would result in an alternative total sum of money which is less than his actual total sum of money in his actual fee tariff system. Such information may be transferred to the user via one type of service, like short message service (SMS), e-mail or the like.

In particular, the method according to the invention could involve an Intelligent Network (IN) platform. Such IN platform could establish data connections to access simulation data out of a calculation of an optimization process as discussed before. Further, the IN platform could establish data connections to the user (client) to automatically contact him and to provide information about preferred fee tariff systems to him via data connections using one type of service, as discussed before.

A preferred embodiment of the invention is described referring to the figures attached to this description.

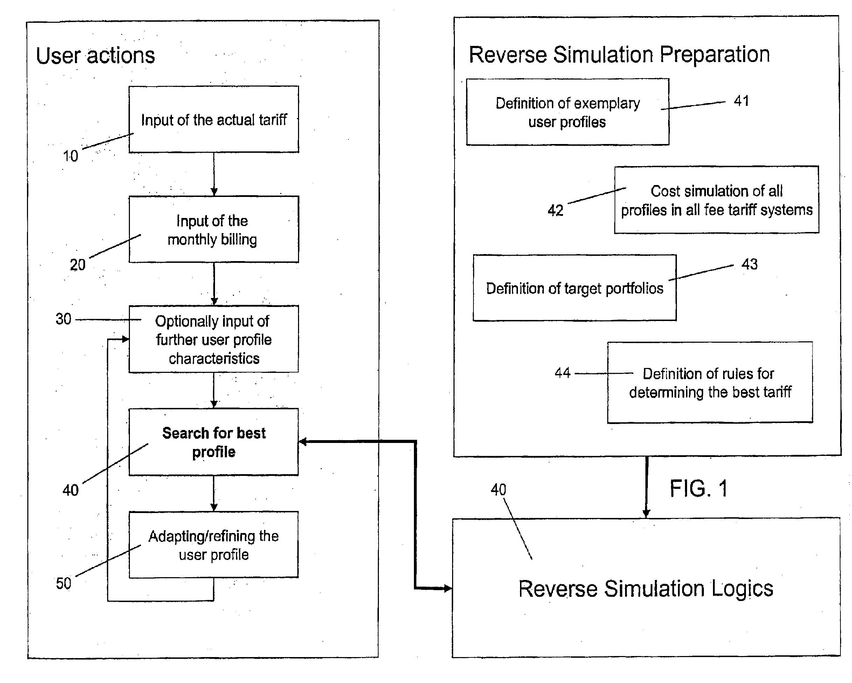

According to Fig. 1, the method according to the invention starts with a first step 10, wherein the user inputs his actual fee tariff system by selecting it out of a number of fee tariff systems which are available in the present market and which were available in the past.

In a second step 20 the user inputs his average monthly billing for all telecommunication services which are to be covered by the future fee tariff system.

As an optional step 30 the user may input further parameters describing his user profile, e.g. the frequency of use for a specific type of service or user attributes such as the age, the profession or the gender of the user or the type of use for the fee tariff system, e.g. professional or private use.

In the following step 40 the best profile for the user is sought. This step 40 includes a reversed simulation logic which is described below in further detail. As can be seen from Fig. 1, a number of steps are used to prepare reverse simulation logics. A first step 41 comprises the definition of exemplary user profiles, e.g. 1000 different user profiles.

In a further preparation step 42 for all these user profiles a simulation of the costs in all fee tariff systems which are available in the future is conducted.

Further, in preparation step 43 target figure portfolios are defined. In this step, the user may define additional criteria which should be fulfilled by the optimum fee tariff system. E.g., the user may restrict the search to a fee tariff system of a certain provider. Further, the user may define a geographical region wherein the optimum fee tariff system should be offered.

Finally, in preparation step 44 the rules for determining the optimum fee tariff system are defined. In this step, the different costs simulated for all user profiles in all fee tariff systems may be compared on a percentual base in order to express the cost saving in one tariff in a relative percentual amount when compared with the actual fee tariff system.

After these preparation steps 41-44 have been conducted, the reverse simulation logics can be started and as a result of this step a selected user profile and a recommendation of a fee tariff system based on the assumption of this user profile, the user data received in steps 10, 20 is output to the user.

The user may then optionally refine the user parameters in step 50 by repeating steps 30 and 40 to further define his user profile, whereafter the best profile is sought again in step 40 using the reverse simulation logics as before.

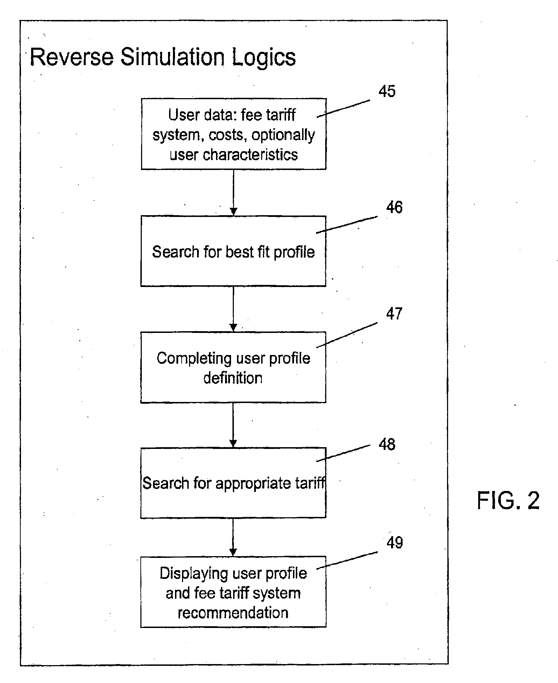

Referring now to Fig. 2 the reverse simulation logics includes the following steps:

In a first step 45 of the reverse simulation logics the user data, the actual fee tariff system and the monthly billing rate as input by the user and optionally further user parameters as discussed before and input in step 30 are read in.

Based on these pieces of information in step 46 a user profile is sought which is a best fit for the user data read in step 45.

In step 47 any missing parameters are completed using standard values, e.g. a fraction of short message services of 50%.

Subsequently, in step 48 an appropriate and optimum fee tariff system for the such defined user profile is sought based on pre-determined rules. These pre-determined rules may as a first approach define that the optimum fee tariff system should be that one which produces the lowest costs for the user profile. Further, the rules may define that small variations in the user profile, such as small changes in the frequency of use of the types of service should not result in significant changes of the total costs for the user.

In a last step 49 the user profile which was used for the calculation of the recommendation of an optimum fee tariff system and the recommendation of an optimum fee tariff system is displayed to the user.

A first example is based on four fee tariff systems having fees according to the following table which are available for the user.

| **Services** | **Tariff A** | **Tariff B** | **Tariff C** | **Tariff D** |
|---|---|---|---|---|
| Monthly Fee | $10,00 | $20,00 | $30,00 | $40,00 |
| Mobile Voice | $0,25 | $0,20 | $0,15 | $0,10 |
| Local Calls | $0,20 | $0,05 | $0,10 | $0,10 |
| Int Calls | $2,00 | $1,00 | $0,70 | $0,50 |

The user input can be as follows:
Tariff A actual tariff
$50,00 spent per month

Based on this data a total of seven different user profiles are calculated for the actual fee tariff system A revealing the following results:

| User profiles | **Profile 1** | **Profile 2** | **Profile 3** | **Profile 4** | **Profile 5** | **Profile 6** |
|---|---|---|---|---|---|---|
| Mobile Voice | 0 min | 100 min | 100 min | 100 min | 200 min | 500 min |
| Local Calls | 0 min | 0 min | 50 min | 0 min | 50 min | 0 min |
| Int Calls | 0 min | 10 min | 0 min | 30 min | 20 min | 50 min |
| | | | | | | |
| **Cost in Tariff A** | $10,00 | $55,00 | $45,00 | $95,00 | $110,00 | $235,00 |

Since user profiles 2 and 3 were calculated to be near the required spent per month the one was chosen which comprises a shorter time of total service, which is user profile 2. Alternatively, the user may be asked in an additional step which user profile of the two he considers to be the best fit for him or the user may be asked for an additional input, e.g. the overall time of phone service and after having this additional input the user profile may be selected which is closer to the users entry of 100 Minutes spent per period.

In the next step for this selected user profile the four available fee tariff systems are calculated, revealing the following results:

| | **Tariff A** | **Tariff B** | **Tariff C** | **Tariff D** |
|---|---|---|---|---|
| Cost Profile 2 | $55,00 | $50,00 | $52,00 | $55,00 |

Comparing the calculated results for the four different fee tariff systems the fee tariff system B is recommended for this particular user.

A second example is based on the same fee tariff system discussed above. The user input can be as follows:
Tariff B actual tariff
$80,00 spent per month
250 Minutes overall

Based on this data a total of seven different user profiles are calculated for the actual fee tariff system B revealing the following results:

| User profiles | **Profile 1** | **Profile 2** | **Profile 3** | **Profile 4** | **Profile 5** | **Profile 6** | **Profile 7** |
|---|---|---|---|---|---|---|---|
| Mobile Voice | 0 min | 100 min | 100 min | 100 min | 200 min | 500 min | 500 min |
| Local Calls | 0 min | 0 min | 50 min | 0 min | 50 min | 0 min | 50 min |
| Int Calls | 0 min | 10 min | 0 min | 30 min | 20 min | 50 min | 0 min |
| | | | | | | | |
| **Cost in Tariff B** | $20,00 | $50,00 | $42,50 | $70,00 | $82,50 | $170,00 | $122,50 |

Since only user profile 5 was calculated to be near the required spent per month of the user it was chosen without considering the 250 Minutes entry by the user.

In the next step for this selected user profile the four available fee tariff systems are calculated, revealing the following results:

| | **Tariff A** | **Tariff B** | **Tariff C** | **Tariff D** |
|---|---|---|---|---|
| Cost Profile 5 | $110,00 | $82,50 | $79,00 | $75,00 |

Comparing the calculated results for the four different fee tariff systems the fee tariff system D is recommended for this particular user.

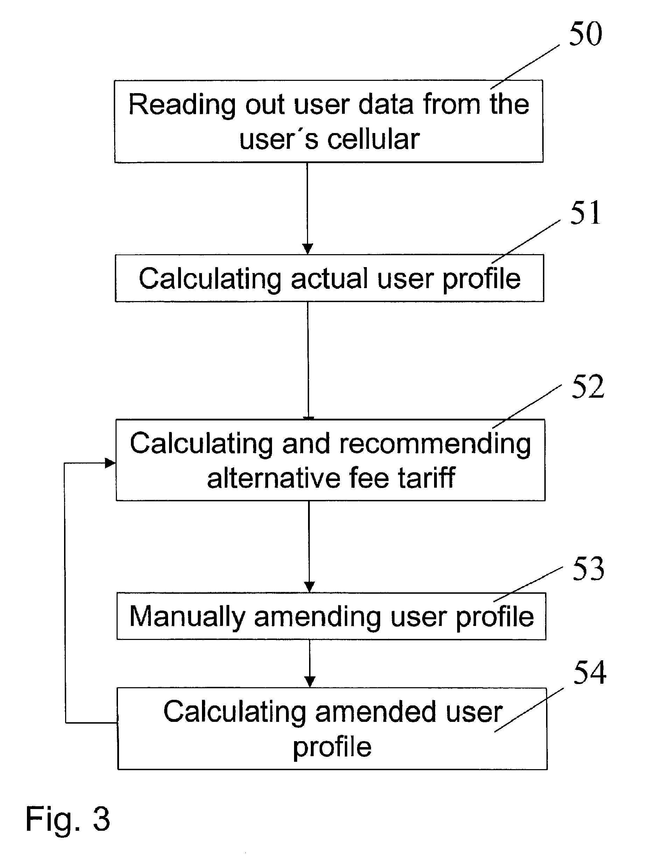

Figure 3 shows a second embodiment of the invention. According to this embodiment, relevant user data which is required for the optimization process is read out from a memory within the user's cellular in a first step 50 via wireless Bluetooth data transfer. The user data read out comprises the country codes and regional codes of all phone numbers stored in the address book of the user's cellular and all phone connections, SMS connections and e-mail connections stored data in the register of incoming and outgoing data connections in the cellular.

In a following step 51, the actual user profile is calculated based on the such read out user data.

Hereafter, in step 52 an alternative fee tariff is sought for which produces a smaller total sum of money than the actual fee tariff of the user when applying the user profile calculated in step 51. This alternative fee tariff is recommended to the user. In a subsequent step 53 the user may amend his user profile manually by changing certain or all user profile data calculated in step 51. By this, the user may do some corrections which appear necessary to him to produce a user profile for his expected future user behavior.

Based on this such amended user profile in step 54 an amended user profile may be calculated using amended user profile data from step 53 and completing these amended user profile data with calculated user profile data from step 51, if necessary. Based on the such calculated amended user profile, the process may step back to step 52 to repeat calculation and recommendation of an alternative fee tariff and the user may compare the such calculated fee tariff to the fee tariff recommended to him before the profile correction.

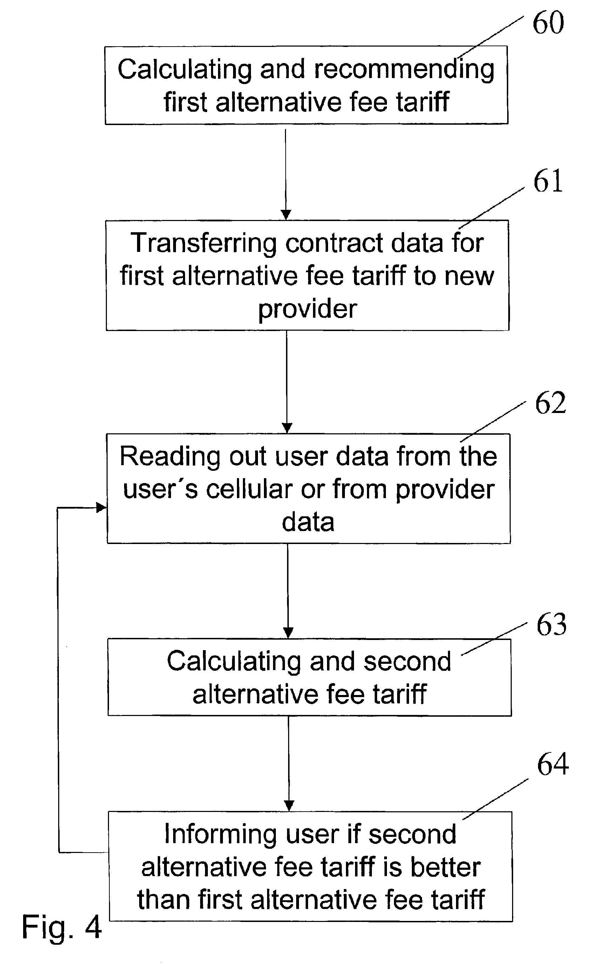

Figure 4 shows a third embodiment of the invention. According to this embodiment, following a first step 60 of calculating and recommending a first alternative fee tariff to the user, the contract data for this alternative fee tariff system is automatically transferred to the new provider of this fee tariff system in step 61.

After a certain period of time, which may be three months, actual and updated user data is read out in step 62 from either the user's cellular or from user data provided by the new provider. This reading out of user data is limited to anonymous data required for calculating an actual and updated user profile. Based on this actual user profile, a second alternative fee tariff is calculated in step 63. This second alternative fee tariff is based on much more realistic user data than the first alternative fee tariff since actual and updated user data were read out for this calculation. The total sum resulting from the second alternative fee tariff is compared to the total sum resulting from the first alternative fee tariff or to an actual total sum read out with the user data. In case that such comparison shows that the second alternative fee tariff would be preferable for the user, the user is informed about his option to change in the second alternative fee tariff via SMS or e-mail. The user may then confirm his intention to change the fee tariff again and following this, relevant contract data may be transferred to a new provider to initiate the change of the fee tariff.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network. A typical computer apparatus may comprise a processor, memory, input devices and output devices all operatively coupled together. Suitable output devices include displays such as LCDs, and suitable input devices may include keyboards, mice, etc.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time,
b. calculating an estimated individual distribution of the frequency of use of the different types of service by applying an algorithm to the user data,
c. calculating one alternative total sum of money paid for all types of services in total for the distribution of services as calculated in b) within the specific period of time by applying an alternative fee tariff system,
d. comparing the alternative total sum with the actual total sum, and
e. selecting the alternative fee tariff system as an optimized fee tariff system if the alternative total sum of money calculated using the alternative fee tariff system is smaller than the actual total sum of money.

2. A method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time,
b. calculating an estimated individual distribution of the frequency of use of the different types of service by applying an algorithm to the user data,
c. calculating a first alternative total sum of money paid for all types of services for the distribution of services as calculated in b) within the specific period of time by applying a first alternative fee tariff system,
d. calculating a second alternative total sum of money paid for all types of services for the distribution of services as calculated under above b) within the specific period of time by applying a second alternative fee tariff system,
e. comparing the first alternative total sum of money, the second alternative total sum of money and the actual total sum of money, and
f. selecting as an optimized fee tariff system that fee tariff system for which the smallest total sum of money was calculated.

3. A method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time,
b. calculating an estimated individual distribution of the frequency of use of the different types of service by applying an algorithm to the user data,
c. calculating a number of alternative total sums of money paid for all types of services for the distribution different types of services as calculated under above b) within the specific period of time by applying a respective number of alternative fee tariff systems,
d. comparing all alternative total sums of money and the actual total sum of money with each other, and
e. selecting as an optimized fee tariff system that fee tariff system out of the number of fee tariff systems and the actual fee tariff system for which the smallest total sum of money was calculated.

4. A method according to claim 1, 2 or 3, wherein calculating the estimated individual distribution of the frequency of use of the different types of service from the user data comprises the steps of:
b1) applying a number of prestored typical distributions of the frequency of use of the different types of service,
b2) calculating a typical amount of money for each type of service for each of these distributions by applying the actual fee tariff system of the user,
b3) if necessary, calculating an individual amount of money for each type of service by scaling each of the typical amounts of money as calculated under above b) with one single scaling factor such that the sum of all individual amounts of money of the types of service results in the actual total sum of money paid for all types of services, and
b4) if step b3 is undertaken, calculating an individual distribution of the frequency of use for each type of service by applying the actual fee tariff system to the scaled individual amount of money for each type of service as calculated in c), and
b5) selecting the one of the number of user profiles for which a total sum was calculated which is closest to the actual total sum as the estimated individual distribution of the frequency of use of the different types of service.

5. A method according to claim 4, wherein the step of applying a pre-determined typical distribution of the frequency of use of the different types of service is done by selecting such a distribution which allows:
i) a maximum number of connections in the actual fee tariff system with the actual total sum of money, or
ii) a maximum duration of the connections in the actual fee tariff system with the actual total sum of money.

6. A method according to claim 4 or 5, further comprising the steps of:
a1) receiving user data containing at least one additional information about the actual distribution of the frequency of use of one or more types of services in the past,
and wherein applying a predetermined typical distribution of the frequency of use of the different types of service is done by
b1i) further determining at least one fixed individual frequency of use for at least one type of service from the at least one additional information about the actual distribution of the frequency of use of one or more types of services in the past and
b1ii) calculating an estimated distribution of the frequency of use for the remaining types of services.

7. A method according to claim 4, 5 or 6, further comprising the steps of:
a1) receiving user data containing at least one additional information about the actual distribution of the frequency of use of one or more types of services in the past,
and wherein applying a predetermined typical distribution of the frequency of use of the different types of service is done by
b1i) calculating an actual frequency of use of at least one type of service from the additional information,
b1ii) selecting one user profile from a list containing a number of predetermined typical user profiles wherein each typical user profile contains a distribution of the frequency of use of the types of services
b1iii) wherein the one user profile is selected such that the frequency of use as calculated under above b1i) is equal or similar to the respective frequency of use according to the selected user profile.

8. A method according to any of the preceding claims, further comprising presenting a list of stored fee tariff systems to the user and receiving a selection of the fee tariff system of the user from the list of stored fee tariff systems.

9. A method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time,
b. selecting a number of user profiles from a list containing a number of pre-determined typical user profiles wherein each typical user profile contains a distribution of the frequency of use of the types of services,
c. calculating an alternative total sum of money for the time period for each user profile by applying an alternative fee tariff system,
d. comparing the alternative total sums with the actual total sum, and
e. displaying the actual total sum and at least one alternative total sum such that the difference between the alternative fee tariff system and the actual fee tariff system can be recognized.

10. A method for selecting an optimized individual fee tariff system for a user of a telecommunication system, the fee tariff system comprising fee rates for at least two different types of services, the method comprising the steps of:
a. receiving user data, the user data comprising an actual total sum of money paid for all types of services within a specific period of time in the past and an identification of the fee tariff system of the user in this period of time,
b. selecting a number of user profiles from a list containing a number of pre-determined typical user profiles wherein each typical user profile contains a distribution of the frequency of use of the types of services,
c. calculating a plurality of alternative total sums of money for the time period for each user profile by applying a plurality of alternative fee tariff systems,
d. comparing the alternative total sums with the actual total sum, and
e. displaying the actual total sum and a number of alternative total sums such that the difference between at least two alternative fee tariff systems and the actual fee tariff system can be recognized.

11. A method according to claim 9 or 10,
wherein at least two alternative total sums for different user profiles but identical alternative fee tariff systems are displayed.

12. A method according to claim 9, 10 or 11, further comprising the step of
a. receiving user data containing at least one additional information about the actual distribution of the frequency of use of one or more types of services in the past,
b. calculating an actual frequency of use of at least one type of service from the additional information,
wherein the number of user profiles is selected such that the frequency of use as calculated under above b) is equal or similar to the respective frequency of use according to each of the selected user profile.

13. A method according to any of the preceding claims, wherein the user data consists of the actual total sum of money and the identification of the fee tariff system of the user.

14. A method according to any of the preceding claims wherein the step of receiving user data comprises the step of transferring user data from a memory device located in a user's cellular to a calculating device and performing at least the steps of calculating one alternative total sum of money paid for all types of services in total for the distribution of services as calculated within the specific period of time by applying an alternative fee tariff system, and comparing the alternative total sum with the actual total sum in said calculating device, wherein the actual total sum of money paid for all types of services within a specific period of time is calculated based on the user data transferred from the memory device to the calculating device.

15. A method according to the preceding claim 14, wherein address data of the user and/or data representing data connections established with the cellular within a specific period of time in the past are read out from the memory device.

16. A method according to any of the preceding claims 14 or 15, further comprising a step of modifying the transferred user data before calculating the actual sum and the alternative sum.

17. A method according to any of the preceding claims, wherein the step of selecting the alternative fee tariff system comprises contacting a provider of the alternative fee tariff system and transferring relevant contract data to this provider.

18. A method according to the preceding claim 17, wherein the step of selecting the alternative fee tariff system comprises selecting a first alternative fee tariff of the current provider and selecting a second alternative fee tariff of a different provider, further comprising the steps of
- transferring contract data for the first alternative fee tariff to the current provider , and
- transferring contract data for the second alternative fee tariff to the different provider after a predetermined time interval.

19. A method according to any of the preceding claims, further comprising a predetermined time after the step of selecting the alternative fee tariff system the steps of
f. reading out user data, said user data comprising the actual types of service used by the user and its frequency of use in the time since the change of the fee tariff system
g. calculating an actual total sum of money paid for these types of services within a specific period of time,
h. calculating one alternative total sum of money paid for all types of services in total for the actual frequency of use of the actual types of services as read out in step f) within the specific period of time by applying an alternative fee tariff system,
i. comparing the alternative total sum with the actual total sum, and
j. informing the user if the alternative total sum of money calculated using the alternative fee tariff system is less than the actual total sum of money wherein the user is preferably informed via one data connection of the types of service.

20. A computer readable medium comprising code for performing the method of any of claims 1-19.

21. A computer apparatus comprising the computer readable medium of claim 20.
